# EUROPÄISCHE PATENTSCHRIFT

(11) **EP 2 937 149 B1**
(45) Veröffentlichungstag und Bekanntmachung des Hinweises auf die Patenterteilung: **15.01.2020**
(21) Anmeldenummer: 15164373.1
(22) Anmeldetag: 21.04.2015
(51) Int. Cl.: B06B 3/00, B23B 29/12, B23K 20/10, B23K 20/12, B24B 1/04

(54) **EINRICHTUNG ZUM BEARBEITEN VON WERKSTÜCKEN MITTELS HOCHFREQUENTER SCHWINGUNGEN**
DEVICE FOR PROCESSING WORKPIECES BY MEANS OF HIGH FREQUENCY VIBRATIONS
DISPOSITIF DE TRAITEMENT DE PIÈCES AU MOYEN DE VIBRATIONS À HAUTE FRÉQUENCE

(30) Priorität: 22.04.2014 DE 102014105662; 18.07.2014 DE 102014110102
(43) Veröffentlichungstag der Anmeldung: 28.10.2015
(73) Patentinhaber: inspire AG für mechatronische Produktionssysteme und Fertigungstechnik, 8005 Zürich (CH)
(72) Erfinder: Deibel, Karl-Robert, Dr., 8049 Zürich (CH); Müller, Michael, 6242 Wauwil (CH); Weiss, Lukas, 4054 Basel (CH)
(74) Vertreter: Winter, Brandl, Fürniss, Hübner, Röss, Kaiser, Polte - Partnerschaft mbB

(56) Entgegenhaltungen:
- EP-A1- 0 591 104
- EP-A1- 0 646 435
- WO-A1-2006/022592
- JP-A- 2006 247 808

## Beschreibung

Die Erfindung betrifft eine Einrichtung zum Bearbeiten von Werkstücken mittels hochfrequenter Schwingungen gemäß dem Oberbegriff des Anspruchs 1.

Bei einer derartigen Einrichtung wird zum Bearbeiten von Materialien, wie beispielsweise durch Schneiden, Schweißen, Zerspanen oder Erodieren ein Schwingungskörper mittels hochfrequenter Schwingungen in Resonanzschwingungen versetzt. Derartige hochfrequente Schwingungen liegen vorzugsweise im Ultraschallbereich, der Schwingungskörper wird dann üblicherweise "Sonotrode" genannt. Bei bestimmten Bearbeitungsverfahren, beispielsweise einer zerspanenden Bearbeitung, wird dieser resonanten Schwingung mit vergleichweise geringer Amplitude eine in der Regel niederfrequente oder aperiodische Linear- und/oder Rotationsbewegung mit größerer Amplitude beziehungsweise mit größerem Hub (Verfahrweg) überlagert. Derartige Rotationsbewegungen von Werkzeugen treten beispielsweise beim Bohren oder Fräsen auf. Linearbewegungen bei der schallgestützten Bearbeitung treten zum Beispiel beim Schneiden von Papier oder Folien oder beim Erodieren von harten metallischen Werkstoffen auf. Ein derartiger Betrieb, bei dem eine Bewegung mit größerer Amplitude (Linear-/Rotationsbewegung) von einer hochfrequenten Schwingung überlagert ist, ist im Prinzip ohne Resonanz, das heißt ohne erzwungene Schwingung des Schwingkörpers, nur sehr schwierig realisierbar, da ein erheblicher Energieaufwand erforderlich ist, um den Schwingkörper mit der hochfrequenten Schwingung zu beaufschlagen.

Im Folgenden wird der Schwingungskörper "Sonotrode" genannt, die Erfindung ist jedoch keinesfalls auf die Anwendung von Ultraschallschwingungen begrenzt, sondern deckt auch Anwendungen mit anderen Schwingungsfrequenzen ab.

In der Regel ist eine Sonotrode ein länglicher Körper, an dessen einem Ende ein Schwingungsgenerator (Ultraschallkonverter) angebracht ist. Am anderen Endabschnitt der Sonotrode befindet sich das Werkzeug zur Bearbeitung des Werkstücks/Materials. Die Sonotrode ist somit zwischen dem eigentlichen Werkzeug und dem Generator/Konverter angeordnet, wobei durch geeignete Dimensionierung der Sonotrode die Art der Resonanzschwingung in Grenzen bestimmbar ist. Um bei einer gegebenen Anregungsamplitude eine gewünschte Werkzeug- bzw. Prozessamplitude einzustellen, kann ein sogenannter Booster vorgesehen werden, der als gesondertes Element oder als ein Teil der Sonotrode ausgebildet ist. Ein derartiger Booster erlaubt die Verstärkung der Anregungsamplitude im umgekehrten Verhältnis der beiden Anschlussflächen.

In der Sonotrode werden stehende Wellen erzeugt, deren Schwingungsmodi unter anderem durch die Geometrie der Sonotrode beziehungsweise des Boosters bestimmt ist. Eine Möglichkeit der Auslegung derartiger Sonotroden zielt darauf ab, im Wesentlichen nur einen Längsmode zu erzeugen. Dies bedeutet, dass im Generator/Konverter und am Ende des Werkzeugs je die maximale Schwingungsamplitude in Längsrichtung auftritt und dazwischen, beispielsweise in der Mitte der Sonotrode, ein oder über die Länge verteilt mehrere Schwingungsknoten entstehen. Für einen derartigen Längsmode sollte der Sonotrodenkörper axialsymmetrisch ausgebildet sein. Aus fertigungstechnischen Gründen werden die Sonotroden meist rotationssymmetrisch gefertigt.

Bei einer anderen Auslegung wird auf einen sogenannten Torsionsmode abgestellt. Dabei tritt an einem freien Ende oder an beiden freien Enden der stangenförmigen Sonotrode eine maximale Rotationsamplitude auf. Dazwischen liegt - ähnlich wie beim Längsmode - mindestens ein Schwingungsknoten.

Bei weiteren Auslegungen der Sonotrode wird darauf abgestellt, andere und/oder kombinierte Schwingungsmodi einzustellen.

Die Sonotrode kann als Komponente der Einrichtung zur Bearbeitung von Werkstücken mittels hochfrequenter Schwingungen unter Einhaltung gewisser Regeln frei gestaltet werden, um ein bestimmtes Schwingungsverhalten einzustellen. Dieses ist jedoch auch unter anderem noch durch die Fügestellen zwischen der Sonotrode und dem Schwingungsgenerator beziehungsweise dem Werkzeug beeinflusst. Derartige Fügestellen bewirken in der Regel eine Dämpfung der Resonanzschwingung. Dadurch wird die Funktion der Sonotrode, das heißt die Schwingung in Resonanz, beeinträchtigt. Insbesondere kann es in dem Bereich, in dem eine Dämpfung der Resonanzschwingung aufgrund der Fügestellen oder der Lagerung der Sonotrode erfolgt, im Betrieb zu Erhitzungen und in der Folge zu einem Versagen der Einrichtung kommen.

Bei dem Betrieb einer Einrichtung zur Bearbeitung von Werkstücken ist beispielsweise im reinen Längsmode ein wesentliches Dimensionierungskriterium die Anzahl der Fügestellen sowie die Positionierung der Halterungen für die Sonotrode, die ebenfalls eine Fügestelle darstellen können.

Typischerweise ist eine Sonotrode im Längsmodus derart ausgelegt, dass ein oder zwei Schwingungsknoten entstehen - an diesen sollte dann auch entsprechend die Halterung der Sonotrode erfolgen. Üblicherweise werden zur Halterung Klemmringe oder dergleichen verwendet, die im Bereich des oder der Schwingungsknoten positioniert sind. Die Beschränkung der Positionierung der Halterungen auf die Lage der Schwingungsknoten ist eine schwerwiegende Einschränkung bei der Auslegung von Sonotroden und der Konstruktion der Anschlussflächen für den Generator beziehungsweise das Werkzeug.

Eine solche herkömmliche Halterung einer Sonotrode durch Festlagerung in einem oder mehreren Schwingungsknoten ist zum Beispiel aus den Druckschriften DE 195 81 256 B4, DE 44 39 284 C2, DE 10 2009 048 696 B3 und US 2007/0257579 A1 bekannt.

Die DE 44 39 284 C2 beschreibt eine Sonotrode, welche in Festlagern, die zur Verringerung der Beeinträchtigung des Schwingungsverhaltens der Sonotrode gummielastische Elemente wie z.B. O-Ringe aufweisen, zwischen denen die Sonotrode aufgenommen ist, gelagert ist. Zusätzlich wird die Sonotrode in einem Halter starr fixiert. Die Halterung der Sonotrode erfolgt in deren Schwingungsknoten.

Die DE 10 2009 048 696 B3 offenbart eine Sonotrode, die durch spezielle Halteringe, die eine Dämpfung der Schwingung der Sonotrode reduzieren sollen und daher aus einem inneren und einem äußeren Ring bestehen, geführt ist. Allerdings ist dennoch die Platzierung der Ringe auf Schwingungsknoten beschränkt.

In der US 2007/0257579 A1 ist eine Einrichtung zur ultraschallgestützten Bearbeitung von Werkstücken gezeigt, bei der die Sonotrode im Bereich eines Schwingungsknotens über einen herkömmlichen Haltering gelagert ist. Zur Verringerung von Radialschwingungen ist im Bereich des werkzeugseitigen Endabschnitts der Sonotrode, das heißt außerhalb des Schwingungsknotens eine Linearlagerbuchse (Kugelbuchse) angeordnet.

Problematisch bei all diesen Lösungen ist, dass im Bereich dieser Knotenpunkte üblicherweise die größten inneren Spannungen aufgrund der einwirkenden dynamischen Kräfte auftreten. Aus diesem Grund ist die Anordnung der Halterungen in den Knotenpunkten schwierig, da berücksichtigt werden muss, dass diese Halterung nicht so steif ausgeführt sein darf, dass die Resonanzschwingungen beeinträchtigt sind. Hinzu kommt, dass der Schwingungsknoten in der Praxis nicht ein Punkt im streng geometrischen Sinn mit Schwingungsamplitude Null ist, sondern eine Zone, in der die Schwingungsamplitude vergleichweise gering ist. Mit jeglicher Reib- und/oder formschlüssiger Halterung geht deshalb auch eine Dämpfung einher. Dies ist einerseits dadurch begründet, dass die Halterung zwangsläufig eine gewisse geometrische Ausdehnung hat. Zum Anderen ist dies dadurch bedingt, dass auch im Bereich des Schwingungsknotens kleine Schwingungsamplituden auftreten, welche dann durch die Halterung gedämpft werden.

Ein weiteres Problem besteht darin, dass für die maximale Steifigkeit in Querrichtung (Radialrichtung) die Halterung möglichst nahe am Punkt der Krafteinleitung, das heißt werkzeugseitig, positioniert sein sollte. In der Regel befindet sich jedoch in diesem Bereich kein Schwingungsknoten, so dass die Sonotrode wie ein auskragender Balken gehalten werden muss, was die Steifigkeit in Querrichtung am Ende der Sonotrode stark heruntersetzt. Dieses Problem lässt sich zwar mit der aus der US 2007/0257579 A1 bekannten Kugelbuchse etwas verringern - nachteilig bei einer derartigen Lösung ist jedoch der erhebliche Bauraum, der für eine derartige Kugelbuchse bereitzustellen ist. Des Weiteren wirkt diese auch dämpfend.

Der Durchmesser der Sonotrode ist in gewissen Grenzen wählbar, wobei jedoch aus den oben genannten Gründen der Durchmesser der Sonotrode im Hinblick auf die benötigte Biegesteifigkeit in Querrichtung nicht zu klein gewählt werden darf.

Noch problematischer ist die Auslegung der Sonotrode dann, wenn diese in Axialrichtung und/oder rotativ bewegt werden soll. In einem derartigen Fall muss die Sonotrode mit einem oder mehreren Lagersystemen, die im Hinblick auf die gewünschte Anwendung (Axialbewegung, rotative Bewegung) ausgelegt sind, geführt werden. Eine derartige Lagerkonstruktion ist aufwendig und kann zu einer reduzierten Steifigkeit am Sonotrodenende führen.

Hinzu kommt, dass es beim Betrieb einer Sonotrode im kombinierten Längs- und Torsionsmode schwierig bis praktisch unmöglich sein kann, die Lagerung über herkömmliche Reib- oder formschlüssige Halterungen zu bewirken, da nicht genügend frei zugängliche Schwingungsknotenpunkte vorhanden sind.

In der DE 33 14 457 ist eine Reibschweißeinrichtung zum Schweißen von Behältern offenbart, wobei dieses Verschweißen mittels Ultraschall erfolgt. Ein ein Behälterteil abstützender oberer Trägerkörper hat einen Ultraschallgeber, über den eine ein Werkzeug tragende Spindel in Schwingung versetzt werden kann. Diese Spindel ist im Abstand zu diesem Werkzeug über ein Luftlager gelagert.

In der WO 2006/022 592 A1 ist eine Einrichtung zum Bearbeiten von Werkstücken offenbart, bei der eine Sonotrode mittels eines Klemmrings und einer Kugelbuchse gelagert ist.

In der Druckschrift EP 0 646 435 A1 ist eine Einrichtung zum Bearbeiten von Werkstücken beschrieben, bei der ein von einem Drehantrieb angetriebenes Werkzeug mit Ultraschall beaufschlagt ist. Ein Schwingkörper ist dabei mittels eines Linearlagers gelagert, das als Luftlager ausgeführt sein kann.

Die Druckschrift EP 0 591 104 A1 offenbart eine Werkzeugspindel für ein Werkzeug, bei dem ebenfalls die Drehbewegung des Werkzeugs von einer Ultraschallschwingung überlagert ist. Die Lagerung im Bereich der Vorrichtung zur Ultraschallerzeugung erfolgt dabei über zwei im Abstand zueinander stehende berührungslose Lager. Die Lagerung der Antriebswelle erfolgt auch bei diesem Ausführungsbeispiel über davon getrennte Lagereinrichtungen.

All diese Lösungen haben entweder einen relativ komplexen Aufbau mit getrennten Lagerungen für den Werkzeugantrieb und den Schwingungskörper oder sind exakt auf einen Werkzeugtypen ausgelegt, so dass bei einem Werkzeugwechsel die vorstehend erläuterten Probleme auftreten, da diese Halterungen im Hinblick auf die Lage der Schwingungsknoten ausgelegt sind.

Der Erfindung liegt die Aufgabe zugrunde, eine verbesserte Einrichtung zum Bearbeiten von Werkstücken mittels hochfrequenter Schwingungen zu schaffen.

Diese Aufgabe wird durch eine Einrichtung mit den Merkmalen des Patentanspruchs 1 gelöst.

Vorteilhafte Weiterbildungen sind Gegenstand der Unteransprüche.

Erfindungsgemäß hat die Einrichtung zum Bearbeiten von Werkstücken mittels hochfrequenter Schwingungen einen Schwingungsgenerator/-konverter zum Anregen eines Schwingungskörpers zu einer Resonanzschwingung. Dieser Schwingungskörper trägt ein Werkzeug zur Bearbeitung des Werkstücks beziehungsweise eines Materials und ist mittels einer Halterung gelagert. Erfindungsgemäß ist diese Halterung nicht als reib- oder kraftschlüssig wirkender Klemmring ausgebildet, sondern ist ein berührungsloses Lager, das unabhängig von Schwingungsknoten der Resonanzschwingung des Schwingungskörpers positioniert werden kann. Bei herkömmlichen Lösungen ist, wie in der Beschreibungseinleitung erläutert, der Klemmring im Bereich des Schwingungsknotens anzuordnen, um die Resonanzschwingung nicht zu dämpfen.

Unter dem Begriff "berührungsloses" Lager wird ein Lager verstanden, bei dem die Lagerflächen nicht direkt miteinander in Kontakt stehen, sondern bei denen ein Lagerspalt vorhanden ist, der einen derartigen direkten Kontakt verhindert. Dieser Lagerspalt kann dann mit einem Fluid, beispielsweise Luft oder einer geeigneten Flüssigkeit, beispielsweise einem Druckmittel, gefüllt sein. Der Lagerspalt kann jedoch auch durch ein magnetisches Feld oder dergleichen erzielt werden.

Das berührungslose Lager, in dem der Schwingungskörper, vorzugsweise die Sonotrode erfindungsgemäß geführt ist, hat gegenüber herkömmlichen Halterungen den Vorteil, dass es im Wesentlichen keinen dämpfenden Einfluss auf das Schwingungsverhalten der Sonotrode ausübt und daher nahezu beliebig entlang der Länge der Sonotrode und unabhängig von der Position der Schwingungsknoten positioniert werden kann. Durch Verwendung eines berührungslosen Lagers kann die Sonotrode in mindestens einem Freiheitsgrad ohne Einschränkung der Ortswahl beschränkt werden.

Ein weiterer Vorteil der Verwendung eines berührungslosen Lagers besteht darin, dass eine temperaturbedingte Ausdehnung der Sonotrode während des Betriebs weit weniger häufig als bei einer Verwendung herkömmlicher Festlager zu einem Blockieren der Schwingung der Sonotrode führt, da kein direkter reib- oder formschlüssiger Kontakt zwischen Sonotrode und Lager besteht.

Weiterhin hat eine Lagerung der Sonotrode in einem berührungslosen Lager den Vorteil, dass kleinere Verschiebungen der Schwingungsknotenpunkte, wie sie in Folge von Sonotrodentuning zur Optimierung der Resonanz auftreten, keinerlei Nachjustierung der Halterung erforderlich machen. Des Weiteren können auch Verschiebungen der Schwingungsknoten aufgrund eines Werkzeugwechsels kompensiert werden.

Ein weiterer Vorteil der berührungslosen Lagerung der Sonotrode besteht darin, dass keine Notwendigkeit für zugängliche Schwingungsknoten besteht. Ferner ist eine berührungslose Lagerung grundsätzlich für jegliche Kombination von Schwingungen der Sonotrode im Längs- und/oder Torsionsmode mit überlagerten Längs- und/oder Rotationsbewegungen des Werkzeugs anwendbar.

Gemäß der Erfindung wird zumindest ein berührungsloses Lager im Bereich des Werkzeugs angeordnet, so dass dieses mit hoher Präzision geführt ist. In diesem Fall ist es vorteilhaft, die freien Freiheitsgrade durch Halterung der Sonotrode an einem Knoten zu fixieren.

Erfindungsgemäß werden berührungslose Lager und herkömmliche Halteringe (Festlager) kombiniert, um das Schwingungsverhalten der Sonotrode an die jeweilige Anwendung anzupassen. Ein großer Vorteil gegenüber herkömmlichen Halte- und Führungssystemen besteht darin, dass bei Verwendung eines berührungslosen Lagers häufig nur noch ein einziges Festlager notwendig ist, was die Geometrie der Konstruktion vereinfacht und eine verbesserte Schwingung der Sonotrode in Resonanz erlaubt.

Wird diese Sonotrode rotativ und/oder translatorisch (Erodieren) (bzw. linear) bewegt. Hierbei ist eine Führung der Sonotrode zum Bearbeiten (Bohrer, Fräser) durch zwei beabstandet zueinander (z. B. nahe den jeweiligen Enden der Sonotrode) angeordnete berührungslose Lager in Kombination mit einer axial-/translatorischen und/oder rotatorischen Fixierung der Sonotrode mit einem herkömmlichen Festlager in einem zwischen den berührungslosen Lagern liegenden Schwingungsknoten besonders vorteilhaft. Diese Lagerung mit zwei Luftlagern und einem zwischen diesen angeordneten herkömmlichen Festlager ist besonders vorteilhaft, da sie für eine Anwendung der Sonotrode in jeder Kombination der erwähnten Möglichkeiten von Torsions- und Longi tudinalschwingungen und überlagerter Linear- und Rotationsbewegung verwendet werden kann.

Die Kombination aus zwei berührungslosen Lagern und einem herkömmlichen Haltering/Festlager ermöglicht es, die Resonanzfrequenz der Sonotrode im Hinblick auf das Werkzeug beziehungsweise die vorgesehene Anwendung (Bohren, Fräsen, Erodieren ...) oder den Antrieb des Werkzeugs auszulegen - bei dieser Auslegung kann die Art der berührungslosen Lagerung weitestgehend unberücksichtigt bleiben, da diese einen äußerst geringen Einfluss auf die Resonanzfrequenz hat. Im Prinzip muss dann nur noch darauf geachtet werden, dass das zusätzliche Festlager in einem Schwingungsknoten angeordnet wird, um Auswirkungen auf die Resonanzfrequenz zu minimieren. Dies ist besonders vorteilhaft bei einem Werkzeugwechsel, da dies häufig auch mit einer Änderung der Resonanzfrequenz des Systems einhergeht, so dass sich entsprechend die Schwingungsknoten verschieben - die Wechselwirkungen mit der berührungslosen Lagerung sind dabei allerdings sehr gering. Die Verschiebung eines Schwingungsknotens mit Bezug zu dem einen oder zu den mehreren weiteren Festlagern kann man dann in Kauf nehmen.

In dem Fall, in dem die Sonotrode nur noch einen - linearen oder rotativen - Freiheitsgrad haben soll, können zur Blockierung der Linearbewegung beziehungsweise der Rotation zusätzliche, vorzugsweise ebenflächige berührungslose Lager, insbesondere Luftlager, verwendet werden. Eine derartige Lagerung zeichnet sich durch eine hohe Steifigkeit bei minimaler Dämpfung aus.

Für den Fall einer rotativ und/oder translatorisch bewegten Sonotrode bietet sich deren Lagerung mit zwei zueinander beabstandeten berührungslosen Lagern an. Zusätzlich erfolgt eine Fixierung axial translatorisch und/oder rotatorisch an einem Knoten über einen Klemmring/ein Festlager. Grundsätzlich ist für jede Kombination der erwähnten Möglichkeiten von Torsions- und Longitudinalschwingungen einerseits und überlagerter Linear- und Rotationsbewegung anderseits die Lagerung mit Luftlagern möglich.

Bei einem bevorzugten Ausführungsbeispiel der Erfindung ist das berührungslose Lager als Fluidlager ausgeführt, wobei als Fluid ein Gas, vorzugsweise Luft oder aber auch eine Flüssigkeit verwendbar ist. Das Lager kann als hydrostatisches oder hydrodynamisches Lager ausgeführt sein.

Wie bereits erwähnt, kann das berührungslose Lager jedoch auch als Magnetlager oder dergleichen ausgebildet werden.

Bei einer Luftlagerbuchse befindet sich ein mit Druckluft gefüllter Spalt zwischen Lager und Sonotrode. Hierbei sind mehrere Typen von aktivem Luftlager verwendbar, z. B. solche mit Lufttaschen, Düsen oder auch porösem Medium für besonders gleichmäßige Luftverteilung.

Luftlager mit Lufttaschen weisen Bohrungen auf, die quer zur Längsachse z.B. der Sonotrode verlaufen und sich auf der der Sonotrode zugewandten Seite zu sogenannten Lufttaschen verbreitern, die im Querschnitt größer sind als die Bohrungen, durch die Luft in den Spalt zwischen Lager und Sonotrode strömt. Mit Hilfe dieser Luft taschen lässt sich ein homogenes und stabiles Luftkissen zwischen Lager und Sonotrode bilden.

Bei Luftlagern mit Düsen strömt die Druckluft durch mehrere Düsen in den Spalt zwischen Lager und Sonotrode ein.

Manche Luftlager weisen ein poröses Material für eine sehr gleichmäßige Luftverteilung auf. Bezüglich Tragkraft und Luftverbrauch sind Luftlager mit porösem Lagermaterial besser als herkömmliche Luftlager mit Düsen. Außerdem sind die Dämpfung und die Bruchfestigkeit höher. Durch das poröse Lagermaterial sind die Lager weniger anfällig für Beschädigungen. Derartige poröse Lagermaterialien haben gegenüber herkömmlichen Lösungen mit Düsen oder Taschen den Vorteil, dass bei Letzteren der Lagerspalt negativ beeinträchtigt wird, wenn eine Tasche oder eine Düse verstopft wird, so dass es im Extremfall zu einem Versagen des Lagers führen kann. Bei einem porösen Material bildet jede Pore sozusagen eine Art "Düse", so dass eine Verstopfung nicht zu einem Versagen des Lagers führt.

Eine hydrodynamische Lagerung der Sonotrode ist insbesondere bei rotierenden Werkzeugen, wie beispielsweise beim Bohren oder Fräsen, vorteilhaft, da bei der Rotation der Sonotrode deren Rotationsbewegung durch die Ultraschallschwingung überlagert ist. Einem derartigen hydrodynamischen Lager wird Schmiermittel zugeführt, wobei durch die Rotationsbewegung der Sonotrode zunächst eine Mischreibung entsteht, da zunächst der Schmierstoff aufgrund hydrodynamischer Effekte in den Lagerspalt hineingezogen wird. Erst bei genügend hoher Drehzahl entsteht ein geschlossener Schmierfilm im Lagerspalt.

Die Funktion eines hydrostatischen Lagers beruht darauf, dass durch eine externe Druckversorgung kontinuierlich flüssiger Schmierstoff über Einlasskanäle in Kammern zwischen den Lagerflächen gepresst wird. Diese Lagerflächen sind damit stets durch einen dünnen Schmierfilm voneinander getrennt, wodurch es zu keiner Reibung der Lagerflächen kommt. Im Gegensatz zum hydrodynamischen Gleitlager entfällt damit der beim Anfahren und Auslaufen durch die Mischreibung verursachte Gleitwiderstand, der ursächlich für erhöhten Lagerverschleiß ist.

Bei Magnetlagern wird durch magnetische Kräfte eine Welle zwischen Magnetpolen gehalten. Man unterscheidet grundsätzlich passive und aktive Magnetlager. Während bei passiven Magnetlagern die Wechselwirkung zwischen Permanentmagneten genutzt wird, verwendet man bei aktiven Magnetlagern Elektromagnete, die anziehende Kräfte auf ferromagnetische Materialien ausüben.

Bei rotierenden Sonotroden (Bohren, Fräsen) kann in einer Ausführungsform anstelle eines aktiven Luftlagers auch ein passives Luftlager verwendet werden. Ein solches passives Luftlager bzw. aerodynamisches Luftlager funktioniert analog zu einem hydrodynamischen Lager: Durch die Bewegung der Sonotrode wird Luft in den Spalt zwischen Sonotrode und Lager hineingezogen. Die Verwendung eines solchen passiven Luftlagers bringt den Vorteil eines vereinfachten Aufbaus der Ultraschallschwingeinheit mit sich, da z.B. ein Anschluss an ein Druckluftsystem nicht mehr erforderlich ist.

In einer Weiterbildung der Erfindung ist das berührungslose Lager so angepasst, dass der Spalt zwischen Sonotrode und Lager auch bei erhöhter Temperatur der Sonotrode eine vorherbestimmte minimale Spaltweite nicht unterschreitet. Beim Betrieb der Sonotrode erwärmt sich diese stark, was eine Ausdehnung des Körpers der Sonotrode zur Folge hat. Das berührungslose Lager muss daher so ausgelegt sein, dass die Sonotrode zuverlässig gelagert ist, wenn Sonotrode und Lager die gleiche Temperatur aufweisen wie z.B. zu Beginn des Betriebs der Sonotrode, wobei aber auch eine Schwingung der Sonotrode noch möglich sein muss, wenn die Sonotrode relativ zu dem Lager eine höhere Temperatur aufweist und sich ausdehnt z.B. nach längerem Betrieb der Sonotrode. Daher muss der Spalt zwischen Sonotrode und berührungslosem Lager so dimensioniert werden, dass er bei gleicher Temperatur von Sonotrode und Lager stabil ist und bei temperaturbedingter Ausdehnung der Sonotrode eine vorherbestimmte Minimalweite nicht unterschreitet.

Die temperaturbedingte Geometrieänderung der Sonotrode kann durch Wahl eines Materials oder einer Legierung für die Sonotrode mit geringem Wärmeausdehnungskoeffizienten minimiert werden.

Besonders geeignet sind beispielsweise Eisen-Nickel-Legierungen. Diese werden beispielsweise mit der Bezeichnung "Invar" gekennzeichnet.

Erfindungsgemäß hat die Einrichtung zum Bearbeiten eines Werkstücks einen Antrieb für das Werkzeug, so dass dies eine rotatorische oder translatorische Bewegung durchführt. Die Amplitude dieser Bewegung ist wesentlich größer als diejenige der Resonanzschwingung, so dass die Bearbeitungsbewegung von einer hochfrequenten Resonanzschwingung überlagert ist.

Diese Resonanzschwingungen sind vorzugsweise im Ultraschallbereich angeordnet.

Wie erwähnt, besteht ein großer Vorteil eines berührungslosen Lagers darin, dass kleinere Verschiebungen der Knotenpunkte, wie sie insbesondere beim Sonotrodentuning zur Optimierung der Resonanz vorgenommen werden, keinerlei Nachjustierung der Halterung erfordern.

Im Fall einer rotatorisch und/oder translatorisch bewegten Sonotrode bietet sich - wie ebenfalls bereits erläutert - die Lagerung der Sonotrode mit zwei zueinander beabstandeten berührungslosen Lagern an. Zusätzlich erfolgt dann eine Fixierung axial translatorisch und/oder rotatorisch im Bereich eines Schwingungsknotens der Resonanzschwingung der Sonotrode. Grundsätzlich ist für jede Kombination der erwähnten Möglichkeiten von Torsions- und Longitudinalschwingungen einerseits und überlagerter Linear- und Rotationsbewegung andererseits die Lagerung mit berührungslosen Lagern vorteilhaft.

Die EP 2 607 055 A1 offenbart einen luftgelagerten Amboss, also das werkzeugtechnische Gegenstück einer Sonotrode. Da bei herkömmlichen Ambossen oft ein Großteil der durch die Sonotrode aufgebrachten Ultraschallschwingungen in den Amboss anstatt des Zielmaterials übertragen werden, kann eine Luftlagerung des oberen Teils des Amboss die Schwingungsübertragung in das Zielmaterial verbessern. Diese Luftlagerung hat im Falle der EP 2607 055 A1 somit die Aufgabe, eine Kraftübertragung in ein Zielmaterial zu optimieren. Dies ist ein gänzlich anderes Problem als das der vorliegenden Erfindung zugrunde liegende Problem der Führung einer schwingenden Sonotrode.

Im Folgenden werden Ausführungsbeispiele der vorliegenden Erfindung mit Bezug auf die Zeichnungen näher erläutert. Es zeigen:
Fig. 1 den generellen Aufbau der Sonotrode der Einrichtung zum Bearbeiten von Werkstücken mittels hochfrequenter Schwingungen ;
Fig. 2 den Aufbau einer Luftlagerbuchse als Beispiel eines berührungslosen Lagers ;
Fign. 3a, 3c bis 3e verschiedene beispielhafte Anordnungen der Lagerung der Sonotrode welche nicht Teil der Erfindung sind und
Fig. 3b eine erfindungsgemäße Anordnung der Lagerung der Sonotrode.

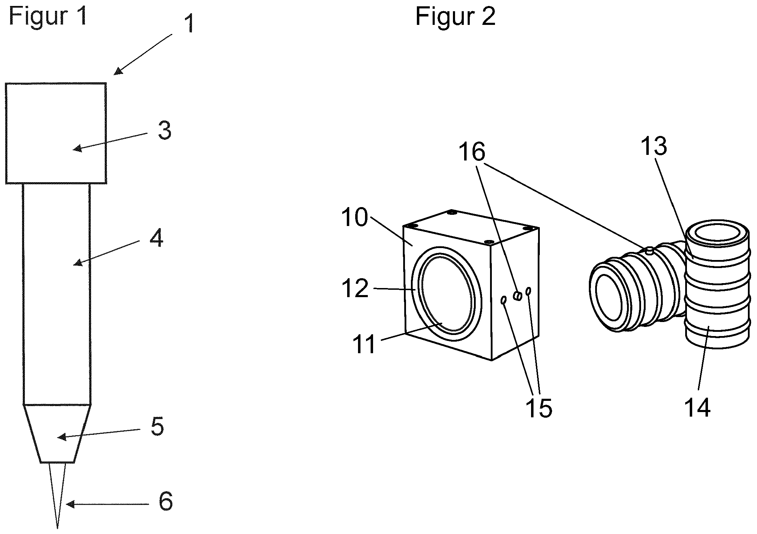

Figur 1 zeigt eine Einrichtung zum Bearbeiten von Werkstücken mittels hochfrequenter Schwingungen 1 mit einer Sonotrode 4, deren eines Ende über einen Ultraschallkonverter 3 kombiniert mit einem Ultraschallgenerator verbunden ist und deren anderes Ende einen Booster 5 aufweist, der zwischen der Sonotrode 4 und einem Werkzeug 6 angeordnet ist. Der Ultraschallgenerator wandelt eine anliegende Netzwechselspannung in eine höher-frequente Wechselspannung um, die dann z.B. durch den umgekehrten piezoelektrischen Effekt von dem Ultraschallkonverter 3 in eine mechanische Schwingung umgewandelt wird. Die Sonotrode 4 besitzt einen länglichen Körper, der in Resonanz zu der von dem Ultraschallkonverter 3 ausgesandten Schwingung schwingt. Der Booster 5 verstärkt die Schwingungsamplitude, die von der Sonotrode in das Werkzeug 6 abgegeben wird. Die Sonotrode 4 kann in einem Längsmode, einem Torsionsmode oder Kombinationen davon betrieben werden.

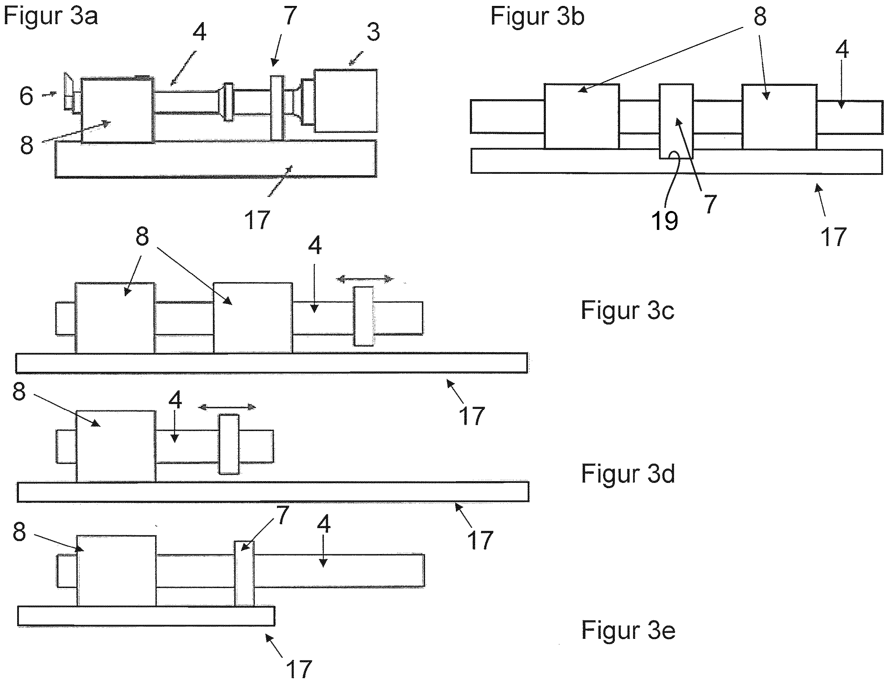

Die Sonotrode 4 mit dem daran gehaltenen Werkzeug 6 werden gemäß den Figuren 3a bis 3e über eine Halterung mit zumindest einem berührungslosen Lager 8 auf einer Grundplatte 17 gelagert. Das berührungslose Lager 8 ist als Luftlager ausgeführt und ist am werkzeugseitigen Endabschnitt der Sonotrode angeordnet. Zusätzlich zum Lager 8 kann noch ein herkömmlicher Klemmring (Haltering) 7 vorgesehen werden, der im Bereich eines Schwingungsknotens der Sonotrode positioniert ist, so dass die freien Freiheitsgrade der Sonotrode 4 im Bereich dieses Schwingungsknotens fixiert sind und somit die Wechselwirkungen im Hinblick auf die Dämpfung der Resonanzschwingung minimal sind.

Figur 2 zeigt eine Luftlagerbuchse 9, wie sie bei einem berührungslosen Lager 8 in einer Ausführungsform der Erfindung Verwendung findet. Die Luftlagerbuchse 9 besteht aus einem Montageblock 10 mit einer Öffnung zur Aufnahme der Sonotrode 4. Zwischen Sonotrode 4 und Montageblock 10 befinden sich ein innerer Einsatz 11 aus Graphit und zwischen innerem Einsatz 11 und Montageblock 10 ein äußerer Einsatz 12 aus Aluminium. Der äußere Einsatz 12 weist an seiner dem Montageblock 10 zugewandten Seite umlaufende O-Ringe 13 aus Gummi auf. Zwischen den O-Ringen 13 befinden sich Rillen 14 zur Aufnahme von Epoxidkleber, welcher durch Bohrungen 15 in dem Montageblock 10 in den Spalt zwischen Montageblock 10 und äußerem Einsatz 12 eingespritzt ist, wodurch der äußere Einsatz 12 in dem Montageblock 10 fixiert ist. Der Montageblock 10 und der äußere Einsatz 12 weisen weiterhin einen Druckluftanschluss 16 auf, durch den Luft durch den inneren Einsatz 11 aus Graphit in den Spalt zwischen innerem Einsatz 11 und Sonotrode 4 einströmt.

Figuren 3a - 3e zeigen verschiedene Anordnungen von berührungslosen Lagern 8 und/oder herkömmlichen Festlagern (Halteringen) 7 zur Fixierung der Sonotrode 4 an einer Fixierfläche 17 für verschiedene Anwendungen. Davon zeigt lediglich Figur 3b eine erfindungsgemäße Lagerung, Figuren 3a und 3c-e zeigen beispielhafte Anordnungen welche nicht Gegenstand der Erfindung sind ,die jedoch das Verständnis der Erfindung erleichtern. Ein wesentlicher Vorteil der Lagerung der Sonotrode 4 in einem berührungslosen Lager 8 besteht darin, dass zusätzlich zu dem mindestens einen berührungslosen Lager 8 maximal ein herkömmliches Festlager 7 erforderlich ist. Dies erlaubt eine verbesserte Steifigkeit der Sonotrode 4 am Werkzeugende bei minimaler Dämpfung der Schwingung der Sonotrode 4.

Fig. 3a zeigt eine Einrichtung 1 die nicht Gegenstand der Erfindung ist, bei der die Sonotrode 4 mit einem herkömmlichen Festlager 7 und einem berührungslosen Lager 8 an der Grundplatte 17 fixiert ist. Hierbei ist das herkömmliche Festlager 7 in einem Schwingungsknoten der Sonotrode 4 nahe an dem Generatorende der Sonotrode 4 angebracht. Da das berührungslose Lager 8 die Schwingung der Sonotrode 4 kaum beeinträchtigt und daher entlang der Länge der Sonotrode 4 frei positionierbar ist, ist das berührungslose Lager 8 nahe dem Werkzeugende der Sonotrode 4 angebracht. Diese Anordnung ermöglicht eine vorteilhafte hohe Steifigkeit der Sonotrode 4 am Werkzeugende, da diese nun nicht wie ein herauskragender Balken gehalten werden muss.

Fig. 3b zeigt eine erfindungsgemäße Lagerung der Sonotrode 4 der Ultraschallschwingeinheit 1 in zwei berührungslosen Lagern 8 und einem entlang der Länge der Sonotrode 4 zwischen den beiden berührungslosen Lagern 8 angeordneten herkömmlichen Festlager 7 in einem Schwingungsknoten.

Bei diesem Ausführungsbeispiel ist das Festlager 7 - auch Klemmring genannt - in Axialrichtung der Sonotrode über eine Nut 19 der Grundplatte fixiert, in die der Klemmring eintaucht. Diese Nut lässt eine Radialbewegung zu - der translatorische Freiheitsgrad in Axialrichtung ist jedoch fixiert. Diese Anordnung der Lagerung der Sonotrode 4 ist besonders vorteilhaft, wenn die Sonotrode 4 zur Werkstückbearbeitung rotativ und/oder linear bewegt wird. Selbstverständlich kann die Fixierung des Klemmrings auf der Grundplatte 17 auch auf andere Weise erfolgen.

Fig. 3c zeigt eine Lagerung der Sonotrode 4 ,die nicht Gegenstand der Erfindung ist, mit zwei berührungslosen Lagern 8 ohne Verwendung eines herkömmlichen Festlagers 7. Zusätzliche berührungslose Lager 8 können verwendet werden, um die Sonotrode 4 in ihrer Bewegung auf nur einen linearen- oder rotativen Freiheitsgrad einzuschränken. Hierfür bieten sich ebenflächige berührungslose Lager 8 als besonders vorteilhaft an.

Fig. 3d stellt eine Lagerung der Sonotrode 4, die nicht Gegenstand der Erfindung ist, in nur einem berührungslosen Lager 8 ohne weitere Fixierung der Sonotrode 4 mit einem herkömmlichen Festlager 7 dar. In dieser Anordnung ist die Sonotrode 4 in ihrer Schwingung und Bewegung weniger eingeschränkt als in dem Beispiel in Fig. 3c.

In Fig. 3e stellt eine weitere Lagerung dar, die nicht Gegenstand der Erfindung ist. Hierbei wird die Sonotrode 4 durch ein berührungsloses Lager 8 gehalten und weist zudem ein herkömmliches Festlager 7 zwischen dem berührungslosen Lager 8 und ihrem Werkzeugende auf. Hierbei wird das Werkzeugende der Sonotrode 4 wie ein herauskragender Balken getragen.

Auch die Ausgestaltung des berührungslosen Lagers kann an die jeweilige Anwendung angepasst werden. So kann das berührungslose Lager z.B. ein aktives oder passives Fluidlager (aerostatisches oder aerodynamisches, hydrostatisches oder hydrodynamisches Lager) oder auch ein Magnetlager sein. Bei rotierenden Sonotroden kann ein passives Luftlager verwendet werden, was den Aufbau der Ultraschallschwingeinheit vereinfacht, da das Erfordernis eines Druckluftanschlusses wegfällt.

Ein wichtiges Kriterium bei der Auslegung des berührungslosen Lagers besteht darin, das Lager so zu gestalten, dass eine Ausdehnung der Sonotrode infolge einer Temperaturerhöhung während des Betriebs der Sonotrode nicht zu einer Blockade des Lagers und somit zu einer starken Beeinträchtigung des Schwingungsverhaltens der Sonotrode führt. Daher muss das berührungslose Lager so ausgelegt sein, dass der Spalt zwischen Sonotrode und Lager auch bei einer gegenüber dem Lager erhöhten Temperatur der Sonotrode eine vorherbestimmte Minimalweite nicht unterschreitet. Wie eingangs erläutert, können durch Temperaturänderungen bedingte Maßänderungen durch Wahl eines Sonotrodenmaterials mit geringem Wärmeausdehnungskoeffizienten minimiert werden.

### Bezugszeichenliste

- 1: Einrichtung zur Bearbeitung von Werkstücken
- 2: Ultraschallkonverter
- 4: Sonotrode
- 5: Booster
- 6: Werkzeug
- 7: Festlager / Klemmring
- 8: berührungsloses Lager
- 9: Luftlagerbuchse
- 10: Montageblock
- 11: innerer Einsatz
- 12: äußerer Einsatz
- 13: O-Ring
- 14: Rille
- 15: Bohrung
- 16: Druckluftanschluss
- 17: Grundplatte
- 19: Nut

## Patentansprüche

1. Einrichtung zum Bearbeiten von Werkstücken, Materialien mittels hochfrequenter Schwingungen, mit einem Schwingungsgenerator zum Anregen eines Schwingungskörpers zu einer Resonanzschwingung und mit einem am Schwingungskörper gehaltenen Werkzeug (6), wobei der Schwingungskörper mittels einer Halterung gelagert ist, die zumindest ein berührungsloses Lager (8) hat, das an einem werkzeugseitigen Endabschnitt des Schwingungskörpers, vorzugsweise einer Sonotrode (4) angeordnet ist, **dadurch gekennzeichnet, dass** die Halterung zwei beabstandete berührungslose Lager (8) und einen Klemmring (7) oder ein Festlager hat, der/das im Bereich eines Schwingungsknotens angeordnet ist, und mit einem Antrieb zum Antreiben des Werkzeugs (6) mit einer Bewegung, deren Amplitude wesentlich größer ist als diejenige der Resonanzschwingung des Schwingungskörpers, vorzugsweise der Sonotrode (4).

2. Einrichtung nach Patentanspruch 1, wobei das berührungslose Lager (8) ein Fluidlager, insbesondere ein Luftlager, ein hydrostatisches oder ein hydrodynamisches Lager oder ein Magnetlager ist.

3. Einrichtung nach einem der vorhergehenden Patentansprüche, wobei die Halterung einen Klemmring (7) umfasst der im Bereich eines Schwingungsknotens der Resonanzschwingung angeordnet ist.

4. Einrichtung nach einem der vorhergehenden Patentansprüche, wobei die Halterung zusätzliche berührungslose Lager (8), vorzugsweise ebenflächige Luftlager zur Blockierung eines Freiheitsgrades hat.

5. Einrichtung nach einem der vorhergehenden Patentansprüche, wobei ein Lagerspalt des berührungslosen Lagers (8) so gewählt ist, dass er auch im erwärmten Betriebszustand eine vorbestimmte Spaltweite nicht unterschreitet.

6. Einrichtung nach einem der vorhergehenden Patentansprüche, wobei die Resonanzschwingung des Schwingungskörpers, vorzugsweise einer Sonotrode (4) im Ultraschallbereich liegt.

7. Einrichtung nach einem der vorhergehenden Patentansprüche, wobei die Sonotrode (4) aus einem Material mit geringem Wärmeausdehnungskoeffizienten, vorzugsweise aus einer Eisen-Nickel-Legierung besteht.

## Claims

1. Device for processing workpieces, materials by means of high frequency vibrations, having a vibration generator for excitation of a vibration body to a resonant vibration and having a tool (6) held on the vibration body, wherein the vibration body is mounted by means of a holder, which has at least one contactless bearing (8), which is arranged on a tool-side end section of the vibration body, preferably of a sonotrode (4), **characterised in that** the holder has two spaced-apart, contactless bearings (8) and a clamping ring (7) or a fixed bearing, which is arranged in the area of a vibration node, and having a drive for driving the tool (6) with a movement, the amplitude of which is substantially larger than that of the resonant vibration of the vibration body, preferably of the sonotrode (4).

2. Device according to claim 1, wherein the contactless bearing (8) is a fluid bearing, in particular an air bearing, a hydrostatic or a hydrodynamic bearing or a magnetic bearing.

3. Device according to any one of the preceding claims, wherein the holder comprises a clamping ring (7), which is arranged in the area of a vibration node of the resonant vibration.

4. Device according to any one of the preceding claims, wherein the holder has additional contactless bearings (8), preferably planar air bearings for blocking a degree of freedom.

5. Device according to any one of the preceding claims, wherein a bearing gap of the contactless bearing (8) is selected so that it does not fall below a predetermined gap width even in the heated operating state.

6. Device according to any one of the preceding claims, wherein the resonant vibration of the vibration body, preferably of a sonotrode (4) is in the ultrasonic range.

7. Device according to any one of the preceding claims, wherein the sonotrode (4) consists of a material with low coefficients of thermal expansion, preferably of an iron-nickel alloy.

## Revendications

1. Dispositif d'usinage de pièces, de matériaux au moyen de vibrations à haute fréquence, avec un générateur de vibrations destiné à exciter un corps vibrant par rapport à une vibration de résonance et avec un outil (6) retenu sur le corps vibrant, dans lequel le corps vibrant est monté au moyen d'un élément de retenue, qui présente au moins un palier sans contact (8), qui est disposé sur une partie d'extrémité côté outil du corps vibrant, de préférence d'une sonotrode (4), **caractérisé en ce que** l'élément de retenue présente deux paliers sans contact (8) distants et une bague de serrage (7) ou un palier fixe, qui est disposé dans une zone d'un nœud de vibration, et avec un entraînement destiné à entraîner l'outil (6) avec un mouvement dont l'amplitude est sensiblement supérieure à celle de la vibration de résonance du corps vibrant, de préférence de la sonotrode (4).

2. Dispositif selon la revendication 1, dans lequel le palier sans contact (8) est un palier à fluide, en particulier un palier à air, un palier hydrostatique ou hydrodynamique ou un palier magnétique.

3. Dispositif selon l'une quelconque des revendications précédentes, dans lequel l'élément de retenue comprend une bague de serrage (7) qui est disposée dans la zone d'un nœud de vibration de la vibration de résonance.

4. Dispositif selon l'une quelconque des revendications précédentes, dans lequel l'élément de retenue présente des paliers sans contact (8) supplémentaires, de préférence des paliers à air à surface plane destinés à bloquer un degré de liberté.

5. Dispositif selon l'une quelconque des revendications précédentes, dans lequel une fente de palier du palier sans contact (8) est sélectionnée de sorte qu'elle ne passe pas au-dessous d'une largeur de fente prédéfinie y compris dans l'état de fonctionnement chauffé.

6. Dispositif selon l'une quelconque des revendications précédentes, dans lequel la vibration de résonance du corps vibrant, de préférence d'une sonotrode (4), se situe dans le domaine des ultrasons.

7. Dispositif selon l'une quelconque des revendications précédentes, dans lequel la sonotrode (4) est constituée d'un matériau avec un faible coefficient de dilatation thermique, de préférence d'un alliage fer-nickel.
